# FASCICULE DE BREVET EUROPEEN

(11) **EP 2 686 534 B1**
(45) Date de publication et mention de la délivrance du brevet: **19.11.2014**
(21) Numéro de dépôt: 12714795.7
(22) Date de dépôt: 16.03.2012
(51) Int. Cl.: F02B 29/04, F02M 35/10, F02D 41/22

(54) **PROCEDE DE DETECTION DE LA DEFAILLANCE D'UN REFROIDISSEUR D'AIR DE SURALIMENTATION**
VERFAHREN ZUR FEHLERDIAGNOSE BEI EINEM LADELUFTKÜHLER
METHOD FOR DETECTING THE FAILURE OF A CHARGE AIR COOLER

(30) Priorité: 18.03.2011 FR 1152245
(43) Date de publication de la demande: 22.01.2014
(73) Titulaire: Renault S.A.S., 92100 Boulogne-Billancourt (FR)
(72) Inventeur: MARTIN, Ludovic, F-91140 Villebon sur Yvette (FR); PETIT, Clement, F-75013 Paris (FR); JEDRUCH, Iwona, 54000 Nancy (FR); MEFFLET, Mathieu, F-92270 Bois Colombes (FR)
(86) Numéro de dépôt international: PCT/FR2012/050552
(87) Numéro de publication internationale: WO 2012/127158

(56) Documents cités:
- EP-A1- 1 201 890
- EP-A2- 1 548 260
- GB-A- 2 475 274
- JP-A- 2007 146 712
- KR-A- 20110 058 981

## Description

L'invention se rapporte à un procédé de détection de la défaillance d'un refroidisseur d'air, dans le circuit d'admission d'air d'un moteur suralimenté. Le circuit d'admission d'air d'un moteur suralimenté comprend un filtre à air, un compresseur, et un refroidisseur d'air de suralimentation, ce circuit étant placé en amont dudit moteur. Le refroidisseur d'air de suralimentation étant une pièce maitresse de ce circuit, il est donc fondamental de surveiller son bon fonctionnement durant tout le cycle de vie du véhicule. L'invention se rapporte à un procédé permettant de détecter instantanément et de façon permanente, une défaillance de ce refroidisseur, et à un équipement prévu pour la mise en oeuvre de ce procédé.

Des procédés visant à détecter la défaillance d'un refroidisseur existent et ont déjà fait l'objet de brevets. On peut, par exemple, citer le brevet EP1201890, qui divulgue un tel procédé se fondant sur la mesure, en amont et en aval de ce refroidisseur, de la température de l'air, la différence de ces températures étant ensuite comparée à une valeur seuil prédéterminée. En fonction de l'écart relevé par rapport à cette valeur seuil, un diagnostic de bon ou mauvais fonctionnement du refroidisseur peut alors être effectué. Ce procédé ne s'appuyant que sur deux mesures de température, peut apparaitre assez fragile, car si l'une des deux valeurs acquises est erronée, soit par un placement approximatif de l'un des deux capteurs, ou tout simplement par un dysfonctionnement de l'un des deux capteurs, le diagnostic concernant le fonctionnement du refroidisseur est faussé.

Les procédés de détection de la défaillance d'un refroidisseur d'air de suralimentation selon l'invention, s'appuie sur la détermination de la température de l'air en une multiplicité de points situés dans le circuit d'alimentation en air du moteur suralimenté, les températures ainsi déterminées étant ensuite traitées pour calculer un paramètre représentatif de l'efficacité dudit refroidisseur, ce paramètre étant finalement comparé à une valeur seuil d'efficacité prédéterminée. Cette comparaison permet d'étayer un diagnostic de bon ou mauvais fonctionnement du refroidisseur. Les procédés selon l'invention apparaissent plus complets, plus sûrs et plus fiables que les procédés de l'état de la technique.

L'invention se rapporte à un procédé de détection de la défaillance d'un refroidisseur d'air de suralimentation placé dans un circuit d'alimentation en air d'un moteur, ledit circuit comprenant en outre un filtre à air et un compresseur, ledit procédé étant réalisé en continu, par itérations successives, et étant caractérisé en ce qu'il comprend :
- Une étape de détermination de la température Tair de l'air entre le filtre et le compresseur, de la température de l'air T_{apc} entre le compresseur et le refroidisseur et de la température de l'air Tsras entre ledit refroidisseur et le moteur (2),
- Une étape de calcul du rapport T_{apc}-T_{sras/}T_{apc}-Tₐᵢᵣ qui est un paramètre représentatif de l'efficacité du refroidisseur,
- Une étape de comparaison de ce paramètre avec une valeur d'efficacité seuil prédéterminée,
- Une étape d'établissement d'un diagnostic de bon ou mauvais fonctionnement du refroidisseur, effectué à partir de cette comparaison.

Autrement dit, le principe de ce procédé repose sur une comparaison permanente entre un paramètre calculé et une valeur seuil, cette comparaison pouvant alors révéler une défaillance du refroidisseur. Ce procédé est effectuée par itérations successives sur des intervalles de temps maitrisés, et, à l'image de ce qui se produit pour un certain nombre d'autres pièces du véhicule, devant assurer une fonction bien spécifique, tant que le fonctionnement desdites pièces est normal, le procédé se poursuit par itérations successives, sans qu'aucune manifestation ne soit perceptible dans ledit véhicule. En revanche, dans le cas où la comparaison révèle une défaillance empêchant le refroidisseur d'assurer pleinement sa fonction, un signal de dysfonctionnement est émis pour avertir le conducteur, et le procédé est interrompu. Ce procédé est automatiquement mis en oeuvre, dès que le moteur du véhicule est allumé, le refroidisseur intervenant dès que la température de l'air augmente de façon provoquée. Ce procédé est particulièrement adapté aux moteurs diesel suralimentés. Les intervalles de temps, au cours desquels se déroulent les étapes du procédé, sont fixés et gérés automatiquement à partir de certains critères, et de certains paramètres dynamiques du véhicule.

Avantageusement, les étapes de calcul, de comparaison et d'établissement de diagnostic, sont réalisées au moyen d'un système électronique de traitement embarqué. En effet, un procédé selon l'invention ne trouve sa justification que si le traitement de toutes les informations nécessaires à l'établissement du diagnostic peut s'effectuer de façon extrêmement fiable, et quasi instantanément, car une défaillance du refroidisseur, même sur une faible durée, ne peut être tolérée sous peine de casser le moteur suralimenté. Un système électronique embarqué permet une bonne réactivité de traitement, une bonne précision dans les calculs, et un établissement sûr du diagnostic.

De façon préférentielle, le procédé comprend une étape de mise en évidence d'un diagnostic de défaillance, à travers l'activation automatique d'un témoin. En effet, l'établissement d'un diagnostic de défaillance aussi sûr et fiable qu'il puisse être, est certes une opération nécessaire mais qui n'est pas suffisante, encore faut-il que ce diagnostic soit communiqué clairement et en temps réel au conducteur du véhicule. Il est donc fondamental que le procédé selon l'invention, mette en oeuvre une étape de restitution de ce diagnostic, afin de pouvoir agir rapidement en conséquence. Le témoin peut revêtir toute forme, l'essentiel étant qu'il puisse s'activer, d'une façon ou d'une autre, pour transmettre l'information selon laquelle le refroidisseur est défaillant et n'assure que partiellement ou plus du tout sa fonction.

Selon un mode de réalisation préféré d'un procédé selon l'invention, le témoin est un voyant, qui s'allume lorsqu'une défaillance du refroidisseur est détectée. Avec ce type de témoin placé, par exemple, sur le tableau de bord, un conducteur ne peut que le remarquer, s'il s'allume.

De façon avantageuse, le procédé s'effectue en continu, par des itérations successives, sur des intervalles de temps correspondant chacun à un régime moteur stabilisé, pour avoir des écoulements d'air stables. Autrement dit, les étapes du procédé ne se déroulent pas sur des intervalles de temps réguliers et constants, mais sur des intervalles de temps variables, correspondant chacun à un régime moteur stabilisé, pour lequel la vitesse du véhicule est sensiblement constante. De cette manière, le diagnostic ne risque pas d'être tronqué par la prise compte d'une vitesse variable, pouvant notamment croître soudainement, la détermination des températures dans ces conditions, n'apportant aucune information tangible sur le bon ou mauvais fonctionnement du refroidisseur.

Selon un autre mode de réalisation préféré d'un procédé selon l'invention, la détermination des températures s'effectue à partir de mesures effectuées directement dans le circuit d'alimentation en air, au moyen de capteurs placés à des endroits appropriés. Cette configuration peut apparaitre quelque peu encombrante et assez lourde à mettre en oeuvre, mais elle permet une détermination fiable et précise des différentes températures, le diagnostic résultant de ces mesures s'avérant donc très sûr.

Selon un autre mode de réalisation préféré d'un procédé selon l'invention, les températures sont évaluées à partir d'une modélisation se fondant sur des paramètres disponibles dans le véhicule. Contrairement à la configuration précédente, cette configuration est simple et rapide à appliquer, car elle ne nécessite pas l'utilisation de pièces spécifiques additionnelles telles que, par exemple, des capteurs de température. En revanche, les températures peuvent être évaluées avec une certaine approximation, rendant le diagnostic de défaillance plus imprécis.

Préférentiellement, le procédé est mis en oeuvre automatiquement, durant les phases de roulage du véhicule. En effet, il faut éviter de dérouler ce procédé durant les phases de ralenti ou à l'arrêt du véhicule, car durant ces phases, la température de l'air sous le capot du véhicule augmente de façon significative, et l'efficacité du refroidisseur d'air de suralimentation s'en retrouve limitée.

Avantageusement, la valeur d'efficacité seuil est fixée en fonction du point de fonctionnement du moteur, et dépend donc de la vitesse du véhicule. De cette manière, le procédé est plus complet et plus précis, car il tient compte du régime moteur et du débit d'air entrant dans le moteur, qui va influer sur la valeur des températures de l'air, en différents points du circuit d'alimentation. Il est aisé d'imaginer que, plus la vitesse du véhicule est importante, plus la valeur d'efficacité seuil du refroidisseur sera élevée. Donc, la valeur d'efficacité seuil du refroidisseur est automatiquement réajustée durant le procédé, pour l'adapter à chaque régime moteur rencontré.

De façon préférentielle, la détermination de la valeur d'efficacité seuil est obtenue au moyen d'une cartographie. Pour chaque type de moteur, des cartographies sont disponibles pour évaluer la valeur d'efficacité seuil du refroidisseur, en fonction du régime moteur ou de la vitesse du véhicule et du débit d'air entrant dans le moteur, voire en fonction d'autres paramètres.

L'invention se rapporte également à un équipement permettant la mise en oeuvre d'un procédé selon l'invention. La principale caractéristique technique d'un équipement selon l'invention, est qu'il comprend trois capteurs de température, une cartographie donnant la valeur de l'efficacité seuil du refroidisseur en fonction du régime moteur et d'un débit d'air entrant dans le moteur, un témoin de mauvais fonctionnement du refroidisseur, et un appareillage électronique de traitement permettant, en continu, et de façon itérative, de calculer le paramètre représentatif de l'efficacité du refroidisseur, de le comparer à une valeur d'efficacité seuil réajustée à chaque régime moteur rencontré, et d'activer le témoin dans le cas d'une détection de la défaillance du refroidisseur.

Les procédés de détection de la défaillance d'un refroidisseur selon l'invention, présentent l'avantage d'être efficaces, sûrs et fiables, tout en n'impliquant que peu de pièces additionnelles, encombrantes et coûteuses. Les procédés de détection selon l'invention ont de plus l'avantage de conférer un caractère sécuritaire et économique marqué aux véhicules dans lesquels ils sont déployés, en évitant de provoquer une panne du véhicule et une destruction potentielle du moteur.

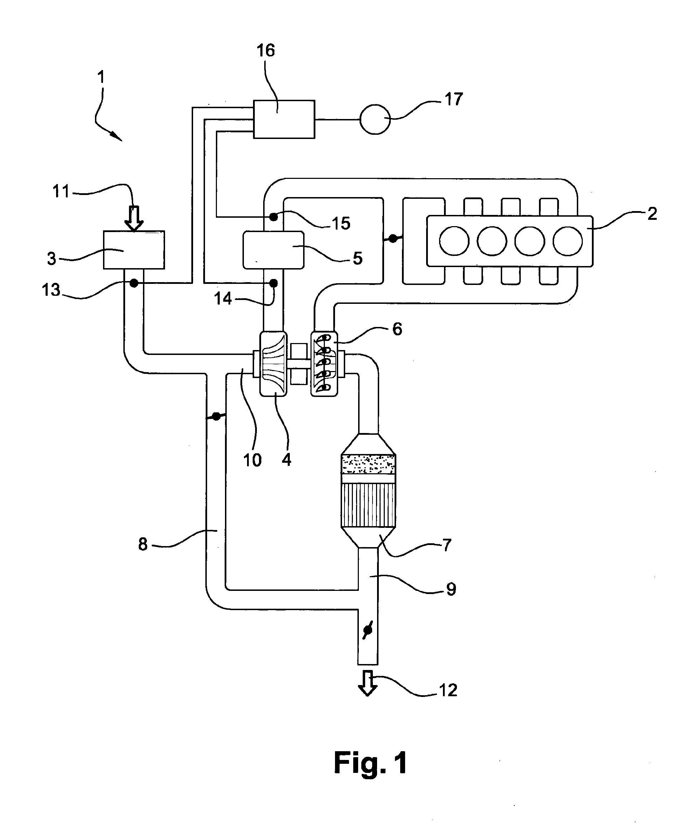

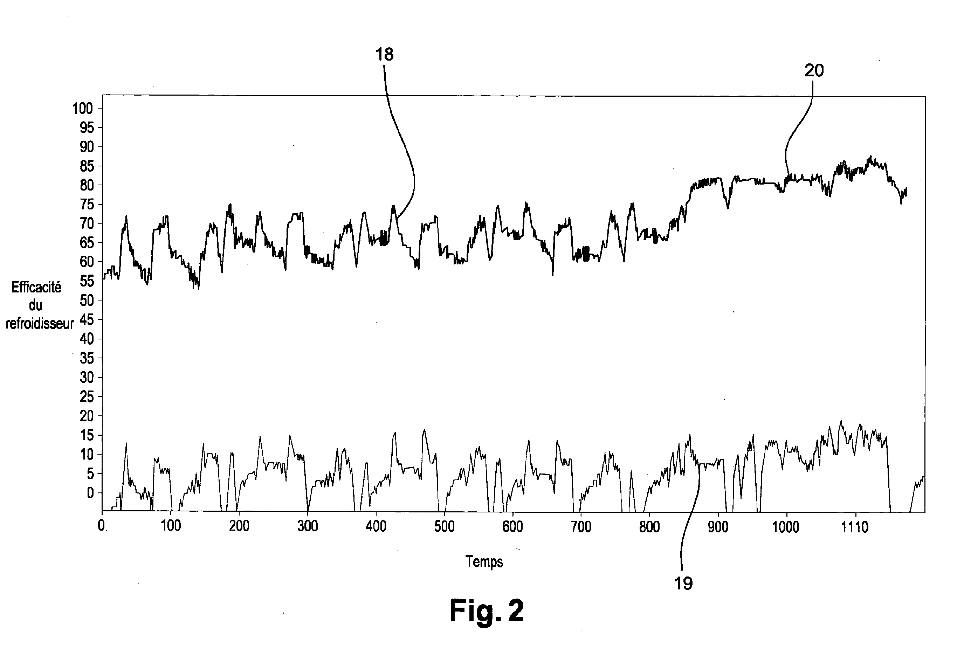

On donne ci-après, une description détaillée d'un mode de réalisation préféré d'un procédé de détection de la défaillance d'un refroidisseur selon l'invention, en se référant aux figures 1 et 2.
- La figure 1 est une vue schématisée d'un circuit d'alimentation en air d'un moteur suralimenté,
- La figure 2 est un diagramme comparatif de l'efficacité d'un refroidisseur en fonction du temps, une courbe se rapportant à un refroidisseur valide, l'autre courbe se rapportant à un refroidisseur défectueux.

En se référant à la figure 1, un circuit d'alimentation 1 en air d'un moteur diesel suralimenté 2, comprend dans l'ordre, un filtre 3 à air, un compresseur 4, et un refroidisseur 5 d'air de suralimentation, placé en amont dudit moteur 2, ledit circuit 1 d'air se poursuivant par une turbine 6 située à la sortie du moteur 2 et se terminant par un pot catalytique 7 placé en aval de ladite turbine 6, une boucle EGR 8 reliant la sortie 9 dudit pot 7 à l'entrée 10 du compresseur 4 . L'air pénètre dans le circuit 1 en amont du filtre à air 3, comme l'indique la flèche 11, passe par ledit filtre 3 puis arrive dans le compresseur 4. L'air sous pression et surchauffé produit par ledit compresseur 4, traverse le refroidisseur 5 puis pénètre dans le moteur 2. En sortie du moteur 2, l'air passe par la turbine 6 avant d'être acheminé dans le pot catalytique 7 puis vers la sortie dudit circuit 1 comme le montre la flèche 12, une partie de cet air étant recyclé en étant injecté en amont du compresseur 4, via la boucle EGR 8. Dans le cadre du procédé de détection de la défaillance du refroidisseur 5 selon l'invention, trois capteurs 13,14,15 de température sont implantés dans le circuit 1 d'alimentation en air, le premier 13 étant placé en aval du filtre à air 3 pour mesurer la température Tₐᵢᵣ de l'air incident pénétrant dans le circuit 1, le deuxième 14 étant situé entre le compresseur 4 et le refroidisseur 5 pour mesurer la température T_{apc} de l'air surchauffé en sortie de compresseur 4, et le troisième 15 étant positionné juste après le refroidisseur 5, pour mesurer la température Tsras de l'air refroidi par ledit refroidisseur 5. Ces trois températures sont mesurées simultanément et en continu, par itérations successives, sur des intervalles de temps correspondant chacun à un régime moteur stabilisé, pour lequel la vitesse du véhicule est constante, afin que ces mesures soient effectuées sur un flux d'air homogène et constant. En effet, si ces mesures étaient réalisées sur des intervalles de temps prédéfinis et constants, sans tenir compte des changements de régime du moteur 2, elles ne seraient pas représentatives du bon ou du mauvais fonctionnement du refroidisseur 5, puisque elles varieraient en fonction de ces différents régimes, indépendamment de l'action du refroidisseur 5. Les capteurs 13,14,15 sont connectés à un système électronique 16 de calcul et de traitement embarqué, et les relevés de température sont donc instantanément et directement transmis à ce système 16, qui va d'abord calculer un paramètre, T_{apc}-T_{sras/}T_{apc}-Tₐᵢᵣ qui est représentatif de l'efficacité du refroidisseur 5, ce paramètre étant sans dimension et pouvant être multiplié par un facteur 100, pour des facilités de présentation et/ou de calcul. Le système électronique 16 a été préalablement paramétré au moyen d'une cartographie donnant un paramètre d'efficacité seuil du refroidisseur 5, pour chaque régime moteur possible, et donc pour chaque vitesse du véhicule. De cette manière, pour un régime de moteur donné et un débit d'air entrant donné, le système électronique compare le paramètre représentatif de l'efficacité du refroidisseur 5, et qui est calculé à partir des mesures de température, à la valeur seuil qu'il a automatiquement sélectionné en fonction du régime moteur. Le procédé se déroule en continu, par itérations successives, et si le paramètre calculé est inférieur à la valeur seuil présélectionnée, un voyant 17 connecté au système électronique 16 et apparent sur le tableau de bord du véhicule, s'allume pour avertir le conducteur, que le refroidisseur 5 est défaillant.

La figure 2 montre deux exemples de calcul, au cours du temps, du paramètre représentatif de l'efficacité d'un refroidisseur 5, d'une part, pour un refroidisseur en bon état de marche, et d'autre part, pour un refroidisseur défaillant. Ces deux courbes 18,19 matérialisent parfaitement, tant sur le fond que sur la forme, les calculs que le système électronique 16 embarqué peut produire à partir des mesures des températures réalisées au moyen des capteurs 13,14,15 placés dans le circuit 1. La courbe supérieure 18 est représentative de la variation dans le temps du paramètre illustrant l'efficacité d'un refroidisseur 5 en bon état de marche, et la courbe inférieure 19, celle d'un refroidisseur 5 défaillant. En fixant une valeur seuil raisonnable de l'efficacité aux alentours de 45%, ce diagramme permet de bien discriminer le refroidisseur valide du refroidisseur défaillant. Sur ce diagramme, et à titre d'illustration, on peut également observer sur la courbe supérieure 18 se rapportant à un refroidisseur valide, une légère augmentation 20 du paramètre calculé s'amorçant au bout de 800s à 900s. Cette augmentation traduit tout simplement un changement de régime moteur, allant dans le sens d'une augmentation de la vitesse, et permet de mettre en évidence qu'il est nécessaire de modifier la valeur seuil de l'efficacité du refroidisseur 5 pour l'adapter à chaque changement de régime.

Un procédé de détection de la défaillance d'un refroidisseur 5 d'air de suralimentation selon l'invention, suit, de façon itérative, les étapes suivantes :
- Détermination de la température Tₐᵢᵣ de l'air entre le filtre 3 et le compresseur 4, de la température de l'air T_{apc} entre le compresseur 4 et le refroidisseur 5 et de la température de l'air Tsras entre ledit refroidisseur 5 et le moteur 2, cette détermination s'effectuant au moyen des capteurs 13,14,15 de température,
- Calcul, sur une plage de temps donné correspondant à un régime stabilisé du moteur 2, du rapport T_{apc}-T_{sras /} T_{apc}-Tₐᵢᵣ,
- Comparaison de ce paramètre avec une valeur d'efficacité seuil prédéterminée, adaptée au régime moteur correspondant,
- Etablissement d'un diagnostic de bon ou mauvais fonctionnement du refroidisseur 5, effectué à partir de cette comparaison,
   - Si le paramètre calculé demeure supérieur à la valeur seuil, le procédé se poursuit en retournant à la première étape de détermination des températures et ainsi de suite,
   - Si le paramètre calculé devient inférieur à la valeur seuil, le procédé est arrêté, le voyant témoin 17 permettant de mettre en évidence une défaillance du refroidisseur 5, s'allume alors. Il devient donc urgent de réparer le refroidisseur 5 défectueux ou de le changer.

## Revendications

1. Procédé de détection de la défaillance d'un refroidisseur (5) d'air de suralimentation placé dans un circuit (1) d'alimentation en air d'un moteur (2), ledit circuit (1) comprenant en outre un filtre (3) à air et un compresseur (4), ledit procédé étant réalisé en continu, par itérations successives, et étant **caractérisé en ce qu'**il comprend :
- Une étape de détermination de la température Tₐᵢᵣ de l'air entre le filtre (3) et le compresseur (4), de la température de l'air T_{apc} entre le compresseur (4) et le refroidisseur (5) et de la température de l'air Tsras entre ledit refroidisseur (5) et le moteur (2),
- Une étape de calcul du rapport T_{apc}-_{Tsras} / T_{apc}-Tₐᵢᵣ qui est un paramètre représentatif de l'efficacité du refroidisseur (5),
- Une étape de comparaison de ce paramètre avec une valeur d'efficacité seuil prédéterminée,
- Une étape d'établissement d'un diagnostic de bon ou mauvais fonctionnement du refroidisseur (5), effectué à partir de cette comparaison.

2. Procédé selon la revendication 1, **caractérisé en ce que** les étapes de calcul, de comparaison et d'établissement de diagnostic sont réalisées au moyen d'un système électronique (16) de traitement embarqué.

3. Procédé selon l'une quelconque des revendications 1 ou 2, **caractérisé en ce qu'**il comprend une étape de mise en évidence d'un diagnostic de défaillance, à travers l'activation automatique d'un témoin (17).

4. Procédé selon la revendication 3, **caractérisé en ce que** le témoin est un voyant (17) qui s'allume, lorsqu'une défaillance du refroidisseur (5) est détectée.

5. Procédé selon l'une quelconque des revendications précédentes, **caractérisé en ce qu'**il s'effectue en continu, par des itérations successives, sur des intervalles de temps correspondant chacun à un régime moteur stabilisé, pour avoir des écoulements d'air stables.

6. Procédé selon l'une quelconque des revendications précédentes, **caractérisé en ce que** la détermination des températures s'effectue à partir de mesures effectuées directement dans le circuit (1) d'alimentation en air, au moyen de capteurs (13,14,15) placés à des endroits appropriés.

7. Procédé selon l'une quelconque des revendications 1 à 5, **caractérisé en ce que** les températures sont évaluées à partir d'une modélisation se fondant sur des paramètres disponibles dans le véhicule.

8. Procédé selon l'une quelconque des revendications précédentes, **caractérisé en ce qu'**il est mis en oeuvre automatiquement, durant les phases de roulage du véhicule.

9. Procédé selon l'une quelconque des revendications 1 à 7, **caractérisé en ce que** la valeur d'efficacité seuil est fixée en fonction du point de fonctionnement du moteur, et dépend donc de la vitesse du véhicule.

10. Procédé selon la revendication 9, **caractérisé en ce que** la détermination de la valeur seuil d'efficacité est obtenue au moyen d'une cartographie.

11. Equipement permettant de détecter une défaillance d'un refroidisseur dans un circuit d'alimentation (1) en air d'un moteur (2) suralimenté, en mettant en oeuvre le procédé selon l'une quelconque des revendications 1 à 10, **caractérisé en ce qu'**il comprend, trois capteurs (13,14,15) de température, une cartographie donnant la valeur de l'efficacité seuil du refroidisseur (5) en fonction du régime moteur et d'un débit d'air entrant dans le moteur (2), un témoin (17) de mauvais fonctionnement du refroidisseur (5), et un appareillage électronique (16) de traitement permettant, en continu, de calculer le paramètre représentatif de l'efficacité du refroidisseur (5), de le comparer à une valeur d'efficacité seuil réajustée à chaque régime moteur rencontré, et d'activer le témoin (17) dans le cas d'une détection de la défaillance du refroidisseur (5).

## Patentansprüche

1. Verfahren zur Erfassung des Ausfalls eines in einem Luftzufuhrkreis (1) eines Motors (2) angeordneten Ladeluftkühlers (5), wobei der Kreis (1) außerdem einen Luftfilter (3) und einen Kompressor (4) enthält, wobei das Verfahren durchgehend durch aufeinanderfolgende Iterationen durchgeführt wird und **dadurch gekennzeichnet ist, dass** es enthält:
- einen Schritt der Bestimmung der Temperatur Tₐᵢᵣ der Luft zwischen dem Filter (3) und dem Kompressor (4), der Temperatur der Luft T_{apc} zwischen dem Kompressor (4) und dem Kühler (5) und der Temperatur der Luft Tₛᵣₐₛ zwischen dem Kühler (5) und dem Motor (2),
- einen Schritt der Berechnung des Verhältnisses T_{apc}-Tₛᵣₐₛ / T_{apc}-Tₐᵢᵣ, das ein für die Leistungsfähigkeit des Kühlers (5) repräsentativer Parameter ist,
- einen Schritt des Vergleichs dieses Parameters mit einem vorbestimmten Schwellenleistungsfähigkeitswert,
- einen Schritt der Erstellung einer Diagnose des fehlerlosen Betriebs oder der Fehlfunktion des Kühlers (5), die ausgehend von diesem Vergleich ausgeführt wird.

2. Verfahren nach Anspruch 1, **dadurch gekennzeichnet, dass** die Schritte der Berechnung, des Vergleichs und der Diagnoseerstellung mittels eines eingebauten elektronischen Verarbeitungssystems (16) durchgeführt werden.

3. Verfahren nach einem der Ansprüche 1 oder 2, **dadurch gekennzeichnet, dass** es einen Schritt des Aufzeigens einer Ausfalldiagnose mittels der automatischen Aktivierung einer Kontrollleuchte (17) enthält.

4. Verfahren nach Anspruch 3, **dadurch gekennzeichnet, dass** die Kontrollleuchte eine Anzeigelampe (17) ist, die aufleuchtet, wenn ein Ausfall des Kühlers (5) erfasst wird.

5. Verfahren nach einem der vorhergehenden Ansprüche, **dadurch gekennzeichnet, dass** es durchgehend durch aufeinanderfolgende Iterationen über Zeitintervalle ausgeführt wird, die je einer stabilisierten Motordrehzahl entsprechen, um stabile Luftströmungen zu haben.

6. Verfahren nach einem der vorhergehenden Ansprüche, **dadurch gekennzeichnet, dass** die Bestimmung der Temperaturen ausgehend von Messungen erfolgt, die direkt im Luftzufuhrkreis (1) mittels an geeigneten Stellen angeordneten Sonden (13, 14, 15) durchgeführt wird.

7. Verfahren nach einem der Ansprüche 1 bis 5, **dadurch gekennzeichnet, dass** die Temperaturen ausgehend von einer Modellisierung ermittelt werden, die auf im Fahrzeug verfügbaren Parametern beruht.

8. Verfahren nach einem der vorhergehenden Ansprüche, **dadurch gekennzeichnet, dass** es automatisch während der Rollphasen des Fahrzeugs durchgeführt wird.

9. Verfahren nach einem der Ansprüche 1 bis 7, **dadurch gekennzeichnet, dass** der Schwellenleistungsfähigkeitswert abhängig vom Arbeitspunkt des Motors festgelegt wird und somit von der Geschwindigkeit des Fahrzeugs abhängt.

10. Verfahren nach Anspruch 9, **dadurch gekennzeichnet, dass** die Bestimmung des Leistungsfähigkeitsschwellwerts mittels eines Kennfelds erhalten wird.

11. Ausrüstung, die es ermöglicht, einen Ausfall eines Kühlers in einem Luftzufuhrkreis (1) eines Auflademotors (2) zu erfassen, indem das Verfahren nach einem der Ansprüche 1 bis 10 durchgeführt wird, **dadurch gekennzeichnet, dass** sie drei Temperaturfühler (13, 14, 15), ein Kennfeld, das den Wert der Schwellenleistungsfähigkeit des Kühlers (5) abhängig von der Motordrehzahl und von einer in den Motor (2) eintretenden Luftmenge angibt, eine Anzeige (17) der Fehlfunktion des Kühlers (5) und ein elektronisches Verarbeitungsgerät (16) enthält, das es durchgehend erlaubt, den für die Leistungsfähigkeit des Kühlers (5) repräsentativen Parameter zu berechnen, ihn mit einem bei jeder angetroffenen Motordrehzahl nachregulierten Schwellenleistungsfähigkeitswert zu vergleichen und die Kontrollleuchte (17) im Fall einer Erfassung des Ausfalls des Kühlers (5) zu aktivieren.

## Claims

1. Method for detecting the failure of a charge air cooler (5) placed in an air supply circuit (1) of an engine (2), said circuit (1) also comprising an air filter (3) and a compressor (4), said method being carried out continuously, by successive iterations, and being **characterized in that** it comprises:
- a step of determining the temperature Tair of the air between the filter (3) and the compressor (4), the temperature of the air Tape between the compressor (4) and the cooler (5) and the temperature of the air Tsras between said cooler (5) and the engine (2),
- a step of calculating the ratio Tapc-Tsras/Tapc-Tair which is a parameter representative of the efficiency of the cooler (5),
- a step of comparing this parameter with a predetermined threshold efficiency value,
- a step of establishing a diagnosis of correct or incorrect operation of the cooler (5), performed on the basis of this comparison.

2. Method according to Claim 1, **characterized in that** the steps of calculating, comparing and establishing a diagnosis are carried out by means of an embedded electronic processing system (16).

3. Method according to either of Claims 1 and 2, **characterized in that** it comprises a step of revealing a diagnosis of failure, through the automatic activation of an indicator (17).

4. Method according to Claim 3, **characterized in that** the indicator is a lamp (17) which lights up, when a failure of the cooler (5) is detected.

5. Method according to any one of the preceding claims, **characterized in that** it is performed continuously, by successive iterations, over time intervals each corresponding to a stabilized engine speed, to have stable air flows.

6. Method according to any one of the preceding claims, **characterized in that** the determination of the temperatures is performed on the basis of measurements performed directly in the air supply circuit (1), by means of sensors (13, 14, 15) placed at appropriate points.

7. Method according to any one of Claims 1 to 5, **characterized in that** the temperatures are assessed on the basis of a modeling based on parameters available in the vehicle.

8. Method according to any one of the preceding claims, **characterized in that** it is implemented automatically, during the vehicle rolling phases.

9. Method according to any one of Claims 1 to 7, **characterized in that** the threshold efficiency value is set as a function of the engine operating point, and therefore depends on the speed of the vehicle.

10. Method according to Claim 9, **characterized in that** the determination of the threshold efficiency value is obtained by means of a mapping.

11. Device that makes it possible to detect a failure of a cooler in an air supply circuit (1) of a supercharged engine (2), by implementing the method according to any one of Claims 1 to 10, **characterized in that** it comprises three temperature sensors (13, 14, 15), a mapping giving the value of the threshold efficiency of the cooler (5) as a function of the engine speed and of an air flow rate entering into the engine (2), an indicator (17) indicating incorrect operation of the cooler (5), and electronic processing equipment (16) making it possible, continuously, to calculate the parameter representative of the efficiency of the cooler (5), to compare it to a threshold efficiency value readjusted to each engine speed encountered, and to activate the indicator (17) in the case of detection of the failure of the cooler (5).
